# EUROPEAN PATENT APPLICATION

(11) **EP 4 682 798 A1**
(43) Date of publication of application: **21.01.2026**
(21) Application number: 23927603.3
(22) Date of filing: 01.12.2023
(51) Int. Cl.: G06Q 10/30

(54) **BATTERY DETERIORATION DEGREE MANAGEMENT SYSTEM**

(30) Priority: 13.03.2023 JP 2023038292
(71) Applicant: HITACHI HIGH-TECH CORPORATION, Tokyo 105-6409 (JP)
(72) Inventor: TAJIRI, Rikiya, Tokyo 105-6409 (JP); YOSHIMURA, Mina, Tokyo 105-6409 (JP); HORIKOSHI, Nobuya, Tokyo 105-6409 (JP); MAEDA, Junichi, Tokyo 105-6409 (JP); MOCHIZUKI, Masahito, Tokyo 105-6409 (JP)
(74) Representative: Mewburn Ellis LLP
(86) International application number: PCT/JP2023/043042
(87) International publication number: WO 2024/189998

(57) **Abstract**

An object of the invention is to provide a technique capable of appropriately selecting a measure with a high economic effect and an implementation timing thereof as a measure to be implemented when a secondary battery deteriorates. A battery deterioration degree management system according to the invention calculates a cost necessary for implementing a measure against a decrease of a state of health of a battery based on cost data describing a cost along with implementation of the measure, and determines the measure having a high economic effect and an implementation timing thereof based on the cost (see FIG. 4).

## Description

### Technical Field

The present invention relates to a technique for managing a deterioration degree of a battery.

### Background Art

A secondary battery gradually deteriorates along with use, and it is necessary to take measures when the deterioration reaches a certain degree. Examples of the measures referred to here include (a) rebalancing of leveling a state of charge of each battery constituting a battery group, (b) rebuilding of regenerating a battery with large deterioration (rebuilding as a regenerated product), and (c) diversion to other applications.

PTL 1 discloses "a system capable of reducing a transportation cost of used secondary batteries and selling the used secondary batteries at low cost, and discloses a technique by which "a used secondary battery reuse system of the invention assists reuse of a used secondary battery used as a secondary battery for driving a vehicle. The used secondary battery reuse system includes a purchase request information reception unit that receives purchase request information on a used secondary battery, a trade-in request information reception unit that receives trade-in request information including information indicating a state of health of the secondary battery mounted on a vehicle, an extraction unit that extracts the purchase request information in which an application of the used secondary battery matches the state of health included in the trade-in request information, a sales price determination unit that determines a sales price of the secondary battery to be traded-in, a transportation cost estimation unit that estimates a transportation cost of the secondary battery to be traded-in from each trade-in facility to a delivery place, and a trade-in price determination unit that determines a trade-in price at each trade-in facility based on the sales price and the transportation cost of the secondary battery to be traded-in. (See Abstract)"

PTL 2 describes a method for calculating a battery capacity of a battery pack as a technique related to the invention. PTL 2 discloses a technique of "a method for diagnosing a battery pack using a system that obtains detection data including a current and a temperature of the battery pack having a configuration in which a plurality of cells are connected in series and a voltage of each cell, the method including: a step of calculating a charge capacity and an SOC of each cell using the current, the temperature, the voltage of each cell, an SOC function of an OCV, and a resistance table, and calculating an imbalance amount, which is an estimation value of the SOC of each cell, and a resistance when the battery pack is fully charged; and a step of calculating an energy capacity of the battery pack using the charge capacity, the imbalance amount, and the resistance. Accordingly, the energy capacity of the battery pack can be accurately calculated even in an unbalanced state. (See Abstract)"

### Citation List

### Patent Literature

PTL 1: JP2021-124982A
PTL 2: WO2022/024885A1

### Summary of Invention

### Technical Problem

An object of the related art as described in PTL 1 is to reduce costs associated with reuse of used batteries. However, since the cost generated when the deteriorating secondary battery is reused includes a cost that temporally fluctuates, it is desirable to consider such a dynamically fluctuating cost. When determining a measure to be implemented, it is desirable to select a measure having a high economic effect and an implementation timing thereof in consideration of an influence of the cost that temporally fluctuates. The same applies to a case where measures other than reuse are implemented. In the related art, since such cost that temporally fluctuates is not sufficiently considered, there is a possibility that a measure whose economic effect is not necessarily high is implemented or a measure is implemented at a timing at which the economic effect is not necessarily high.

The invention has been made in view of the problems as described above, and an object of the invention is to provide a technique capable of appropriately selecting a measure with a high economic effect and an implementation timing thereof as a measure to be implemented when a secondary battery deteriorates.

### Solution to Problem

A battery deterioration degree management system according to the invention calculates a cost necessary for implementing a measure against a decrease of a state of health of a battery based on cost data describing a cost along with implementation of the measure, and determines the measure having a high economic effect and an implementation timing thereof based on the cost.

### Advantageous Effects of Invention

According to the battery deterioration degree management system of the invention, it is possible to appropriately select a measure with a high economic effect and an implementation timing thereof as a measure to be implemented when a secondary battery deteriorates. Other problems, configurations, effects, and the like of the invention will become apparent from the following description of embodiments.

### Brief Description of Drawings

[FIG. 1] FIG. 1 is a configuration diagram of a battery deterioration degree management system 1 according to Embodiment 1.
[FIG. 2] FIG. 2 is a schematic diagram showing a processing flow implemented by a calculation unit 11.
[FIG. 3] FIG. 3 shows a result of predicting a temporal change of an SOH of a battery cell.
[FIG. 4] FIG. 4 is a schematic diagram showing a processing flow implemented by the calculation unit 11.
[FIG. 5] FIG. 5 shows results of measuring the SOH of each battery cell.

### Description of Embodiments

### <Embodiment 1>

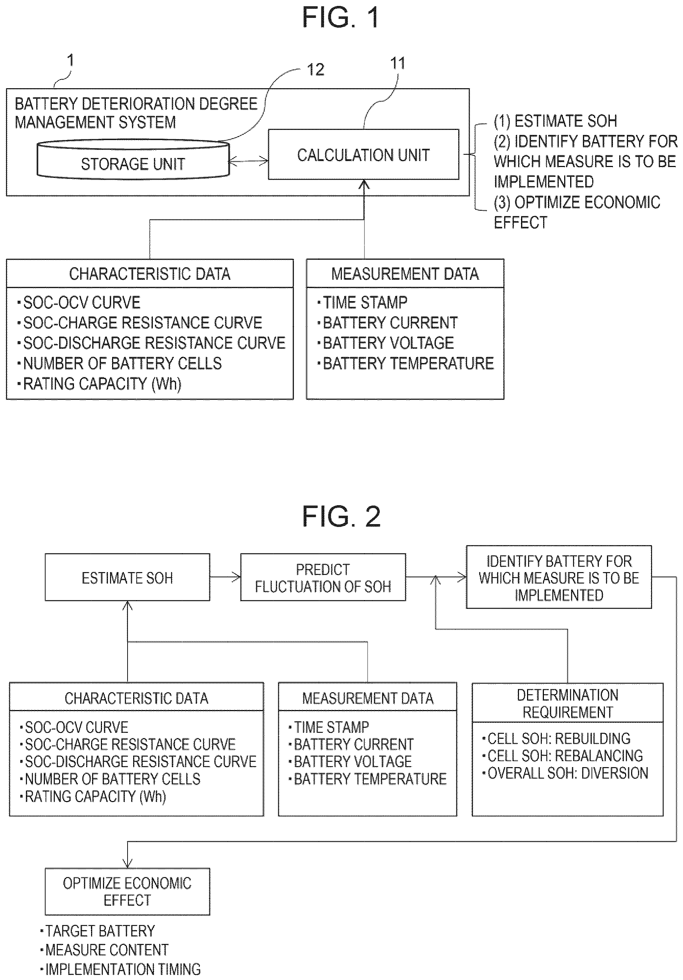

FIG. 1 is a configuration diagram of a battery deterioration degree management system 1 according to Embodiment 1 of the invention. The battery deterioration degree management system 1 is a system that manages a state of health (SOH) of a secondary battery (hereinafter, simply referred to as a battery). The battery deterioration degree management system 1 includes a calculation unit 11 and a storage unit 12.

The calculation unit 11 receives characteristic data and measurement data, and estimates the SOH of the battery using these pieces of data. Any known technique can be used as an estimation procedure. Based on the estimated SOH, the calculation unit 11 further identifies a battery in which deterioration progresses, and determines a measure to be implemented for the battery. When the measure is determined, an economic effect of the measure is optimized. A specific example and a determination procedure of the measure will be described later. The storage unit 12 stores data to be used by the calculation unit 11.

The characteristic data is data describing physical characteristics of the battery, and can be acquired in advance before the SOH is estimated. The characteristic data describes an SOC-OCV curve, an SOC-charge resistance curve, an SOC-discharge resistance curve, the number of battery cells, a rating capacity (Wh), and the like. The SOC-OCV curve describes a relationship between a state of charge (SOC) and an open circuit voltage (OCV) of the battery. The SOC-charge resistance curve describes a relationship between the SOC and a charge resistance of the battery. The SOC-discharge resistance curve describes a relationship between the SOC and a discharge resistance of the battery. The number of battery cells is the number of cells constituting the battery. The rating capacity (Wh) is a rating capacity of the battery.

The measurement data is data describing a result of measuring a physical state of the battery, and can be acquired from, for example, a battery management unit (BMU). The measurement data describes a time stamp, a battery current, a battery voltage, a battery temperature, and the like. The time stamp is a date and time when the measurement data is acquired (or a date and time when the measurement is implemented). The battery current, the battery voltage, and the battery temperature are an output current of the battery, an output voltage of the battery, and a temperature of the battery (or a temperature of a surrounding environment of the battery), respectively.

FIG. 2 is a schematic diagram showing a processing flow implemented by the calculation unit 11. The calculation unit 11 estimates the SOH of the battery using the characteristic data and the measurement data. Specifically, a battery capacity can be calculated using an integrated value of current values during charging and the SOC of the battery at a start and an end of the charging. Further, the SOH can be estimated based on "SOH = 100 × battery capacity/rating capacity of battery". Alternatively, any known technique such as that in PTL 2 can be used. As another method, for example, a temporal change of the battery voltage in a pause period after a charging operation or a discharging operation is acquired, and the SOH can be estimated based on a correspondence relationship between the temporal change and the SOH.

The calculation unit 11 predicts a temporal change of the SOH. Since the SOH gradually decreases along with an elapse of time, it is possible to predict the temporal change of the SOH in the future based on, for example, a time decrease rate thereof. The prediction may be performed using any other method. The prediction of the temporal change of the SOH may be performed by a linear approximation, may be approximated by an auto-regressive moving average (ARMA) or Weibull distribution, or may be predicted using any other method.

The calculation unit 11 identifies a battery whose SOH is lowered, and further determines a measure to be implemented for the battery. Examples of the measure to be implemented include (a) rebalancing of leveling states of charge of batteries constituting a battery group, (b) rebuilding of regenerating a battery with large deterioration (rebuilding as a regenerated product), and (c) diversion to other applications.

The battery cell in which the deterioration progresses experiences a greater decrease in SOC, for example, during discharging than other battery cells. The rebalancing is a process of equalizing the SOC between the battery cell in which the deterioration progresses and a battery cell in which no deterioration progresses. Accordingly, the entire battery group can exhibit performance close to the rating capacity. In this respect, the rebalancing is suitable as a measure to be implemented on the battery cell in which the deterioration progresses.

When the deterioration in the battery cell progresses beyond a degree within which the performance can be recovered by the rebalancing, measures other than the rebalancing are required. The rebuilding is selected as a measure for such a battery cell. Specifically, the battery cell in which the deterioration progresses is taken out of the battery group and reconstructed as the regenerated product. More simply, the battery cell in which the deterioration progresses may be replaced with a new battery. In the present embodiment, this replacement is also regarded as the rebuilding in a broad sense.

From a viewpoint different from that of the battery cells, measures for the entire battery group can also be implemented. For example, when the SOH of the entire battery group gradually deteriorates, the battery group may be still usable but may not satisfy performance requirements in a current use environment. In such a case, it is conceivable to divert the battery group to another use environment in which a request of the performance requirements is gentler. On the other hand, when the SOH of the entire battery group is sufficiently high, it is conceivable to divert the battery group to another use environment in which the request of the performance requirements is more severe. The battery group herein may be a battery module including a plurality of battery cells, a battery pack including a plurality of battery modules, or any other unit.

The diversion of the battery includes recycling by disassembling the battery and taking out materials. Therefore, applications of a diversion destination include recycling applications, and these applications are treated as "diversion" in a broad sense.

When selecting a measure to be implemented for a deteriorating battery, the calculation unit 11 optimizes an economic effect of the measure. Accordingly, the battery for which the measure is to be implemented is determined, and a measure content and an implementation timing are optimized from a viewpoint of the economic effect. A specific method for the optimization will be described later.

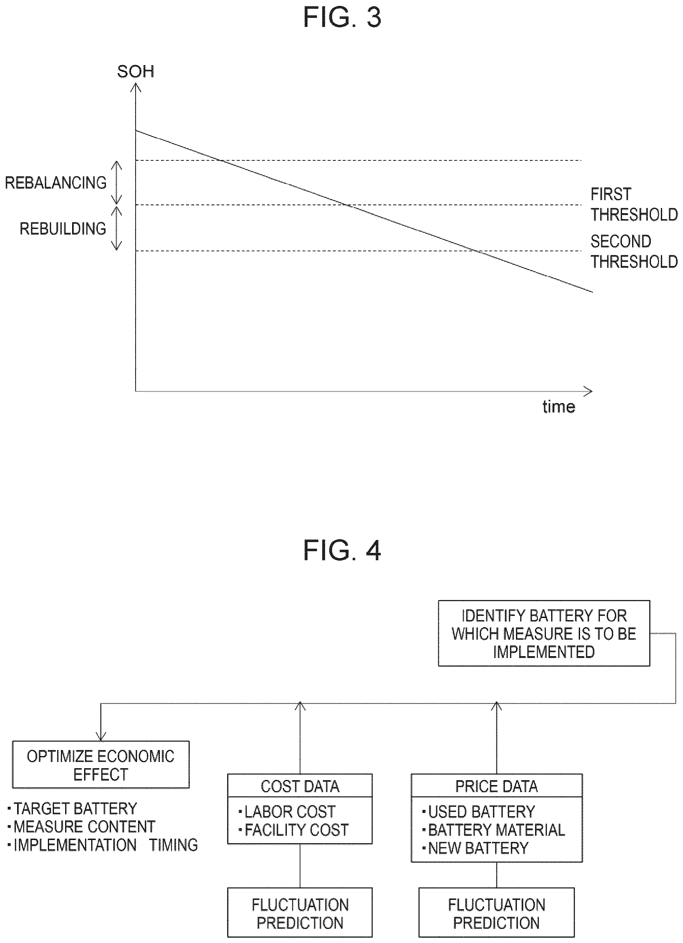

FIG. 3 shows a result of predicting the temporal change of the SOH of the battery cell. When the deterioration of the SOH is relatively small (the SOH is equal to or larger than a first threshold), the rebalancing can be selected as the measure. When the SOH further deteriorates (the SOH is equal to or smaller than the first threshold and equal to or larger than the second threshold), the rebuilding can be selected as the measure. In a vertical axis of FIG. 3, a section for selecting the rebalancing and a section for selecting the rebuilding may or may not be in contact with each other. When the two sections are not in contact with each other, a measure to be implemented in a gap portion between the two sections may be, for example, the rebalancing or the rebuilding.

**In** accordance with FIG. 3, the calculation unit 11 can select which of the rebalancing and the rebuilding is to be implemented, or alternatively, can select a measure that can optimize the economic effect. For example, when the diversion is used as a measure selection, an economic effect of the diversion can be compared with economic effects of other measures. Alternatively, for a battery having an SOH near a boundary between the rebalancing and the rebuilding in FIG. 3, either the rebalancing or the rebuilding may be adopted, and thus it is possible to select which measure to adopt in further consideration of the economic effects. Hereinafter, a method of considering the economic effect instead of the method of FIG. 3 will be described.

FIG. 4 is a schematic diagram showing a processing flow implemented by the calculation unit 11. FIG. 4 shows a specific example of an optimization process in FIG. 2. The calculation unit 11 receives cost data and price data, and optimizes (a) a target battery for which the measure is to be implemented, (b) a measure content, and a timing at which the measure is to be implemented using the cost data and the price data.

The cost data is data describing a result of predicting a cost generated along with implementation of a measure and a temporal fluctuation thereof. The cost data describes labor costs, facility costs, and the like. The labor cost is a labor cost that temporally fluctuates along with the implementation of the measure, and is defined for each measure content. The facility cost is a facility cost that is generated along with implementation of a measure and temporally fluctuates, and is defined for each measure content. When the temporal fluctuation of the cost is small, a fluctuation prediction is not necessarily required. In this case, all the costs are considered to be temporally constant. The same applies to the price data described below.

The price data is data describing a result of predicting a battery price and a temporal fluctuation thereof. The price data describes a used battery price, a battery material price, a new battery price, and the like. The used battery price is a market price of a used battery. The battery material price is a market selling price of a material when a battery is recycled. The new battery price is a market price of a new battery.

The calculation unit 11 performs trial calculation on the economic effect of the measure using the cost data and the price data. For example, an economic effect when the rebalancing is implemented on a certain battery cell at that time is calculated based on the cost data and the price data. Further, an economic effect when the rebuilding is implemented on the battery at that time is calculated based on the cost data and the price data. Further, an economic effect when the diversion is performed on the battery at that time is calculated based on the cost data and the price data.

The economic effect of the rebalancing is determined by, for example, the cost generated along with the implementation of the rebalancing and an economic value of the battery that increases as a battery life extends due to the rebalancing. The cost can be calculated from the cost data. The increasing economic value can be evaluated using any evaluation function based on an increase in the battery life and a temporal fluctuation of the battery price.

The economic effect of the rebuilding is determined by, for example, the cost generated along with the implementation of the rebuilding and an economic value of the battery that increases as the battery life extends due to the rebuilding. The cost can be calculated from the cost data and the price data. Specifically, an expense required to replace the deteriorating cell with a new product or a used product is calculated by referring to the used battery price or the new battery price. The increasing economic value can be evaluated using any evaluation function based on an increase in the battery life and a temporal fluctuation of the battery price.

The economic effect of the diversion is determined by, for example, a cost generated along with the implementation of the diversion and a profit obtained by the diversion. The profit can be calculated based on the price data when, for example, selling to other business operators. A cost (including a labor cost and a transportation cost required for selling) can be calculated from the cost data. When the application is diverted inside the business operator itself, the economic effect is determined by the cost required to discard the existing battery in the diversion destination and the economic value of the battery that increases due to the extension of the battery life in the diversion destination (the number of years of continuation of use is extended by the diverted battery).

The calculation unit 11 performs the trial calculation on the economic effect of each measure at each implementation timing. The calculation unit 11 optimizes the measure to be implemented and the implementation timing thereof based on a result of the trial calculation. For example, with respect to a certain battery, (a) an economic effect when the battery is immediately diverted, (b) an economic effect when the battery is continuously used until end of the life by the rebalancing or the rebuilding, and (c) an economic effect when the battery is diverted after the battery is continuously used until a certain timing by the rebalancing or the rebuilding are compared to determine a measure and an implementation timing with a largest economic effect.

### <Embodiment 1: Summary>

The battery deterioration degree management system 1 according to Embodiment 1 optimizes a measure to be implemented along with a decrease of an SOH of a battery and an implementation timing thereof based on a cost that temporally fluctuates. As a result, it is possible to optimize the economic effect of the measure to be implemented along with the battery deterioration from the viewpoint of the cost.

The battery deterioration degree management system 1 according to Embodiment 1 optimizes a measure to be implemented along with a decrease of an SOH of a battery and an implementation timing thereof based on a cost that temporally fluctuates and a battery market price. As a result, it is possible to optimize the economic effect of the measure implemented along with the battery deterioration from the viewpoint of the market price and the cost. Although both the market price and the cost temporally fluctuate, according to Embodiment 1, by considering the temporal change in market price and cost for each of a number of measures, it is possible to select an optimal measure while considering all of these fluctuating prices.

### <Embodiment 2>

Embodiment 1 describes selection for implementing which of the rebalancing and the rebuilding or selection of a measure having an optimized economic effect according to FIG. 3. In Embodiment 2 of the invention, another method for selecting a measure will be described. The configuration of the battery deterioration degree management system 1 is the same as that of Embodiment 1.

First, the calculation unit 11 calculates an SOH amount that can be recovered by implementing the rebalancing for each battery cell. The calculation unit 11 calculates the economic effect of implementing the rebalancing for each battery cell by the method described in Embodiment 1. For a battery cell exhibiting a sufficient economic effect (an economic effect equal to or greater than a threshold is expected), the rebalancing is selected as the measure. Otherwise, the process proceeds to the following steps. The battery cells to be subjected to this step may be only those in which the SOH is greatly recovered by the rebalancing (the increasing SOH amount is equal to or greater than the threshold).

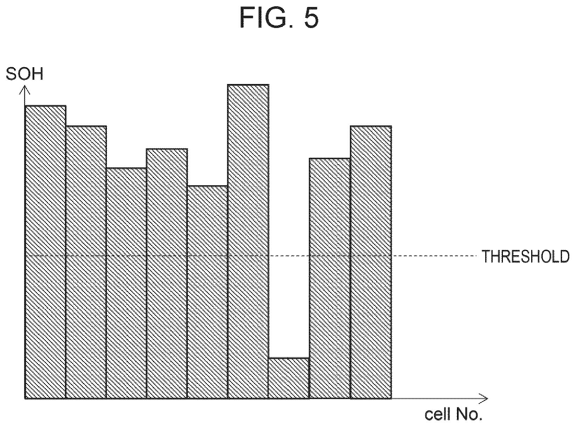

FIG. 5 shows results of measuring the SOH of each battery cell. The calculation unit 11 determines whether the SOH is less than the threshold for the battery cell for which the rebalancing is not selected. In FIG. 5, there is one battery cell whose SOH is less than the threshold. The calculation unit 11 calculates the economic effect when rebuilding the battery cell by the method described in Embodiment 1. When the economic effect is sufficient (the economic effect equal to or greater than the threshold is expected), the rebuilding is selected as a measure for the battery. Otherwise, the diversion is selected as a measure for the battery.

In the method described in Embodiment 1, since the economic effect is subjected to the trial calculation for each implementation timing for all measures, the measures and the implementation timings thereof can be optimized, but a calculation load is large. According to the method of Embodiment 2, since the measures are selected by assigning priorities in an order of rebalance ≥ rebuilding ≥ diversion, the calculation load can be reduced more than that in Embodiment 1.

The calculation unit 11 may consider an environmental load as a preliminary viewpoint when selecting a measure. For example, it is conceivable to acquire environmental load data describing an index indicating the environmental load generated along with implementation of a measure in advance, and adjust the economic effect of the measure according to the index described in the data. The calculation unit 11 selects a measure according to the adjusted economic effect.

### <Embodiment 3>

In Embodiment 3 of the invention, a method for estimating an SOH of a battery will be described. The configuration of the battery deterioration degree management system 1 is the same as those of Embodiments 1 and 2.

PTL 2 describes a method for obtaining a function indicating deterioration of a battery pack based on a battery capacity of the battery pack and estimating a deterioration progress speed and a replacement timing using the function. Since the deterioration progress speed corresponds to the SOH, the SOH of the battery can be estimated using this method. In this method, the state of health of the battery is estimated based on a temporal change of the SOC.

Specifically, first, measured values of a battery voltage, a battery current, and a battery temperature are acquired. Further, an SOC-OCV curve and an SOC-charge resistance curve are referred to. The SOC can be calculated by time-integrating the battery current. Since a charge resistance has a temperature characteristic, the charge resistance can be obtained by referring to the SOC-charge resistance curve using the SOC and the battery temperature. A relationship between the OCV and the SOC can be acquired from the SOC-OCV curve. A relationship between the battery voltage and the OCV can be calculated from the charge resistance and the battery current. A convergence calculation is implemented until a difference between a calculated battery voltage and a measured value thereof becomes sufficiently small. Further, a discharge resistance is acquired by referring to the SOC-discharge resistance curve, and the SOC when the discharge is stopped is obtained using the discharge resistance. The battery capacity of the battery can be obtained based on a difference between an SOC after charging and an SOC after discharging. Further, an approximate function expressing the deterioration speed is obtained based on a time-series change in capacity. This is because the battery capacity gradually decreases as the deterioration of the battery progresses. The calculation unit 11 can estimate the SOH using this method.

The calculation unit 11 can also estimate the SOH based on a measured result of a battery output instead of or in combination with the method in PTL 2. For example, a method described in WO2022/024235A1 can be used. In this document, a fluctuation of the battery voltage in a pause period after a charging operation or a discharging operation is acquired, and the SOH is estimated using the fluctuation. For example, a relatively steep voltage fluctuation (first difference) in a period immediately after charging and discharging are stopped has a correlation with an internal resistance of the battery, and a relatively gentle voltage fluctuation (second difference) in a subsequent period has a correlation with the SOH of the battery.

Therefore, in WO2022/024235A1, both first data describing a relationship between the first difference and the internal resistance and second data describing a relationship between the second difference and the SOH are acquired in advance, and the internal resistance and the SOH are estimated by referring to these pieces of data using the measured values of the first difference and the second difference. This method can estimate the SOH in a relatively short time. The calculation unit 11 can estimate the SOH using this method.

### <Modifications of Invention>

The invention is not limited to the above embodiments and includes various modifications. For example, the above embodiments have been described in detail to facilitate understanding of the invention, and the invention is not necessarily limited to those including all the configurations described above. In addition, a part of a configuration according to a certain embodiment can be replaced with a configuration according to another embodiment, and a configuration according to another embodiment can be added to a configuration according to a certain embodiment. In addition, another configuration can be added to a part of a configuration of each embodiment, and the part of the configuration of each embodiment can be deleted or replaced with another configuration.

In the above embodiments, the calculation unit 11 can be implemented by hardware such as a circuit device where a function thereof is provided, or can also be implemented by a calculation device such as a central processing unit (CPU) executing software where the function is provided.

In the above embodiments, an example in which a measure is implemented for each battery cell is described, but a target for implementing a measure is not limited to a cell. For example, a measure may be implemented for each battery module including a plurality of battery cells, or a measure may be implemented for each battery pack including a plurality of battery modules. A combination of these may be used.

In the above embodiments, as an expense item or a profit item used when calculating the economic effect of the measure, the following items are conceivable, but the invention is not limited thereto:
Reduction of asset maintenance expense: a frequency of regular repair or replacement is reduced, a maintenance expense is reduced, and an investment amount is reduced: a period until purchasing a new asset of the same type is extended, and the investment amount is reduced
Improvement of cash flow: a cash flow is improved by reducing the investment amount and the maintenance expense, and it is possible to ensure funds useful for business stability and future growth
Improvement of selling price: Deterioration is prevented by implementing measures, and the selling price increases

### Reference Signs List

1: battery deterioration degree management system
11: calculation unit
12: storage unit

## Claims

1. A battery deterioration degree management system comprising:
a calculation unit configured to estimate states of health of a plurality of batteries; and
a storage unit configured to store data to be used by the calculation unit, wherein
the calculation unit identifies, among the plurality of batteries, a battery for which a measure against a decrease in the states of health needs to be implemented,
the calculation unit calculates a cost necessary for implementing the measure based on cost data describing at least one of a temporal change in cost along with implementation of the measure and a prediction thereof, and
the calculation unit determines, among the plurality of measures, a measure capable of maximizing an economic effect and an implementation timing thereof based on the calculated cost.

2. The battery deterioration degree management system according to claim 1, wherein
the measure is at least one of
rebalancing for equalizing states of charge of the plurality of batteries,
rebuilding for regenerating the batteries, and
diverting the batteries to other applications having different performance requirement levels.

3. The battery deterioration degree management system according to claim 2, wherein
the calculation unit selects the rebalancing as the measure when the state of health is equal to or greater than a first threshold, and
the calculation unit selects the rebuilding as the measure when the state of health is equal to or greater than a second threshold that is equal to or less than the first threshold.

4. The battery deterioration degree management system according to claim 2, wherein
when the states of health of all of the plurality of batteries are equal to or greater than a third threshold, the calculation unit selects, as the measure, diversion to another application having a higher performance requirement level than a current operation environment of the plurality of batteries, and
when the states of health of all of the plurality of batteries are equal to or less than a fourth threshold less than the third threshold, the calculation unit selects, as the measure, diversion to another application having a lower performance requirement level than the current operation environment of the plurality of batteries.

5. The battery deterioration degree management system according to claim 1, wherein
the cost data describes, as the cost, at least one of a temporal-fluctuating labor cost generated along with implementation of the measure and a temporal-fluctuating facility cost generated along with the implementation of the measure, and
the calculation unit calculates the economic effect using at least one of the temporal-fluctuating labor cost described in the cost data and the temporal-fluctuating facility cost described in the cost data.

6. The battery deterioration degree management system according to claim 2, wherein
the cost data describes, as the cost, at least one of a temporal-fluctuating labor cost generated along with implementation of the measure and a temporal-fluctuating facility cost generated along with the implementation of the measure, and
the calculation unit calculates the economic effect by calculating a cost necessary for implementing the rebalancing, the rebuilding, or the diversion using at least one of the temporal-fluctuating labor cost described in the cost data and the temporal-fluctuating facility cost described in the cost data.

7. The battery deterioration degree management system according to claim 1, wherein
the calculation unit calculates the economic effect based on price data describing at least one of a temporal change in price of the battery and a prediction thereof.

8. The battery deterioration degree management system according to claim 2, wherein
the calculation unit calculates the economic effect based on price data describing at least one of a temporal change in price of the battery and a prediction thereof,
the price data describes at least one of a market price of a used battery, a market price of a battery material, a market price of a new battery, and a prediction of a temporal change thereof, and
the calculation unit calculates the economic effect of each of the rebalancing, the rebuilding, and the diversion based on each of the prices described in the price data or a prediction of a temporal change thereof to determine which of the rebalancing, the rebuilding, and the diversion is to be implemented as the measure.

9. The battery deterioration degree management system according to claim 2, wherein
the calculation unit calculates the economic effect based on price data describing at least one of a temporal change in price of the battery and a prediction thereof,
the calculation unit selects the rebalancing as the measure when the economic effect of the rebalancing is equal to or greater than a fifth threshold, and
the calculation unit selects one of the rebuilding and the diversion as the measure when the economic effect of the rebalancing is less than the fifth threshold.

10. The battery deterioration degree management system according to claim 9, wherein
the calculation unit selects the rebuilding as the measure when the economic effect of the rebuilding is equal to or greater than a sixth threshold, and
the calculation unit selects the diversion as the measure when the economic effect of the rebuilding is less than the sixth threshold.

11. The battery deterioration degree management system according to claim 1, wherein
the calculation unit determines a content to be implemented as the measure based on environmental load data in which an index expressing an environmental load generated along with implementation of the measure is described.

12. The battery deterioration degree management system according to claim 1, wherein
the calculation unit acquires
SOC-OCV data describing a relationship between a state of charge of the battery and an open circuit voltage of the battery,
SOC-charge resistance data describing a relationship between a state of charge of the battery and a charge resistance of the battery, and
SOC-discharge resistance data describing a relationship between the state of charge of the battery and a discharge resistance of the battery, and
the calculation unit estimates the state of health of the battery by estimating a temporal change in battery capacity of the battery by referring to the SOC-OCV data, the SOC-charge resistance data, and the SOC-discharge resistance data.

13. The battery deterioration degree management system according to claim 12, wherein
the calculation unit acquires respective measured values of a voltage output by the battery, a current output by the battery, and a temperature of the battery,
the calculation unit calculates a state of charge of the battery by time-integrating the current,
the calculation unit acquires the open circuit voltage of the battery and the charge resistance of the battery by referring to the SOC-OCV data and the SOC-charge resistance data using the state of charge, and corrects the charge resistance using the temperature,
the calculation unit estimates the voltage using the charge resistance and the open circuit voltage, and
the calculation unit calculates the battery capacity by calculating an SOC when discharge is stopped using the SOC-discharge resistance data.
